## Europäisches Patentamt
## European Patent Office
## Office européen des brevets

(19)

(11) Numéro de publication: **0 024 751**
**B1**

(12) # FASCICULE DE BREVET EUROPEEN

(45) Date de publication du fascicule du brevet:
**14.03.84**

(51) Int. Cl.³: **A 01 B 11/00,** A 01 B 1/02

(21) Numéro de dépôt: **80200706.2**

(22) Date de dépôt: **21.07.80**

(54) **Bêche motorisée.**

(30) Priorité: **29.08.79 BE 878488**

(43) Date de publication de la demande:
**11.03.81 Bulletin 81/10**

(45) Mention de la délivrance du brevet:
**14.03.84 Bulletin 84/11**

(84) Etats contractants désignés:
**AT BE CH DE FR GB IT LI NL SE**

(56) Documents cités:
**AT - B - 295 903**
**DE - C - 294 457**
**DE - C - 404 122**
**GB - A - 1 136 561**

(73) Titulaire: **Durieux, Jules, 20, Ruelle de Thuin,**
**B-6558 Lobbes (BE)**

(72) Inventeur: **Durieux, Jules, 20, Ruelle de Thuin,**
**B-6558 Lobbes (BE)**

BUNDESDRUCKEREI BERLIN

# Machine a bêcher

La présente invention concerne une machine à bêcher suivant le préambule de la revendications principale ci-dessous.

Une telle machine est déjà connue par exemple par le brevet anglais GB-A-1 136 561.

Cette machine connue ne comprend pas elle-même un moteur, car celle est destinée à être traînée par un tracteur, la rotation du ou des couteaux de bêche étant obtenue par exemple grâce à l'accouplement avec un arbre tournant du tracteur. De ce fait le bêchage a lieu sur une largeur égale à la largeur de la machine. La terre est déplacée toujours vers l'arrière de la machine, c'est à dire dans le champ une fois dans un sens, et lorsque la machine est traînée en sens inverse dans l'autre sens. Un tel bêchage, qui peut convenir pour des champs de grande longueur, ne convient pas du tout pour le bêchage d'un jardin.

L'invention a pour but de supprimer l'effort long et pénible demandé lors du bêchage d'un jardin. Un second but de l'invention est une machine de faible encombrement, ne nécessitant pas de grands espaces de travail lors de son utilisation. La machine suivant l'invention est définie dans la partie caractéristique de la revendication principale ci-après.

La machine à bêcher, suivant la présente invention, bêche le jardin de manière identique à celle pratiquée par le jardinier équipé de la bêche manuelle. Les couteaux de bêche de la machine pénètrent dans le sol tout en découpant une motte de terre. Celle-ci est maintenue et retournée puis éjectée de la machine par un éjecteur qui émotte la terre avant de la déposer sur le sol.

La machine peut se déplacer de gauche à droite et de droite à gauche. En fin de sillon, le jardinier recule la machine d'une épaisseur de motte. Des butées situées contre le sillon permettent de régler l'épaisseur des mottes. La commande de mouvement des couteaux de bêche et l'avance de la machine peut être réalisée au moyen de leviers fixées sur un mancheron. Ce mancheron permet aussi de guider la machine le long du sillon. La description ci-après se rapporte à un exemple de réalisation d'une machine à bêcher, suivant l'invention.

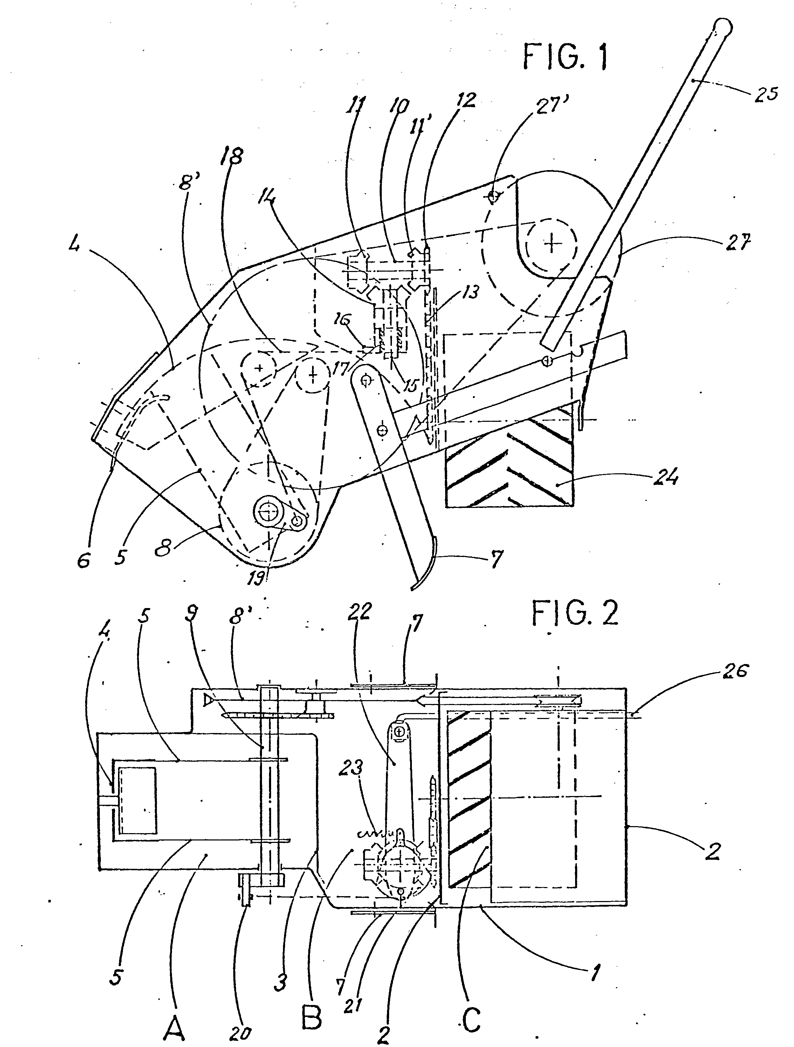

Les figures 1 et 2 représentent, en élévation et en plan une machine à bêcher posée sur le sol. Un bâti est formé par deux tôles 1 reliées par deux cloisons 2 et une protection 3 réalisant ainsi trois compartiments A, B, C. Le compartiment A renferme un arbre rotatif 9 supportant deux couteaux de bêche reliés chacun à l'arbre 9 au moyen de deux lames ressorts 5 disposées pour laisser passer, par exemple, une pièce coincée entre les couteaux. Un éjecteur de motte de terre 6 cintré est fixé au bâti 1 et disposé à l'intérieur des couteaux de bêche 4 pour éjecter la terre emprisonnée entre les couteaux de bêche 4. De chaque côté de la machine à bêcher, une des deux butées oscillantes 7, actionnée par l'opérateur, permet de prendre appui contre le sillon déjà fait. La figure 1 montre une des deux butées qui sont fixées à l'extérieur du bâti. Celle qui suit la machine est pressée contre la paroi du sillon déjà fait, celle qui précède la machine est remontée d'une valeur égale à l'épaisseur de la motte. Ces butées règlent l'épaisseur du sillon et en assurent la continuité.

Ainsi, la machine à bêcher passe sur toute la surface à retourner.

Le compartiment du milieu B comprend un dispositif de liaison et de réduction de vitesse entre le moteur 27 et l'arbre porte-bêche 9.

Le dispositif de liaison et de réduction de vitesse est composé d'un pignon 8 sur l'arbre 9 entraîné par une chaîne et une poulie 8' actionné par une courroie à partir du moteur 27. Dans ce comportiment B se trouve aussi un mécanisme d'avance pas à pas constitué par un arbre 10 équipé de deux engrenages 11 et 11' dont l'un comporte une roue dentée 12. Une chaine 13 transmet un mouvement de rotation intermittent à une roue crantée 24 de sustentation de la machine. Un engrenage 14 est supporté par un axe 15 sur lequel pivote une manivelle 16 rappelée dans une position déterminée par un ressort 23 reliée par une chaîne 18 à une manivelle 19 solidaire de l'arbre 9. La chaîne 18 est tendue par le ressort 23. Lors de la rotation du pignon et de l'arbre 9, la manivelle 19 est entraînée de manière continue et imprime via la chaîne 18, un mouvement oscillant à la manivelle 16.

Une roue libre 17 à l'intérieur de la manivelle 16 permet la rotation de l'arbre 15 lorsque la manivelle 16 pivote dans un sens déterminé. Lorsque le couteau de bêche 4 est dans le sol, la manivelle 16 retourne en position de repos sous l'action du ressort 23, sans entraîner l'arbre 15 et ainsi, sans déplacer la machine. La manivelle oscillante 16 reçoit donc son mouvement de l'arbre 9 supportant le couteau de bêche 4. L'arbre 9 est muni d'une manivelle 19 dont un maneton 20 est relié par la chaîne 18 qui s'enroule sur une came 21 de la manivelle 16 où elle est accrochée. Un levier 22 est commandé par une tringle 26 à partir d'un dispositif, non représenté, fixé sur un mancheron 25 et peut occuper trois positions vérrouillées: marche à gauche (engrenage 14 engrène avec engrenage 11), point mort, et marche à droite (engrenage 14 engrène avec engrenage 11').

Le compartiment C est ouvert vers le bas et abrite la roue crantée 24 qui assure le déplacement pas à pas et la sustentation de la machine. Au-dessus, est situé le moteur 27 suspendu par un pivot 27'. En écartant le moteur 27 de la poulie 8', au moyen d'un dispositif tendeur non représenté, disposé sur le machneron 25, la courroie entre le moteur 27 et la poulie 8', est tendue et réalise l'embrayage de commande de rotation de la bêche.

## Revendications

1. Machine à bêcher comprenant un bâti dans lequel au moins un couteau de bêche (4) découpant une motte de terre est entraîné en rotation par un arbre (9) mené et coopère sur une portion de son trajet après la découpe de la motte avec un éjecteur (6) de mottes de terre monté sur le bati, le couteau (4) comportant une partie coupante parallèle à l'arbre (9), caractérisée en ce que le bâti supporte un moteur (27) entraînant en rotation l'arbre (9) et actionnant en des mouvements intermittents, pas à pas, un mécanisme (10 à 24) assurant le déplacement latéral de la machine dans une direction, parallèle à l'arbre (9), de mécanisme étant également monté sur le bâti.

2. Machine suivant la revendication 1, caractérisée en ce que le mécanisme de déplacement latéral (10 à 24) comprend une roue de sustentation (24) unique du bâti de la machine dont l'axe est perpendiculaire à l'axe (9) supportant le ou les couteaux (4).

3. Machine suivant une des revendications 1 ou 2, caractérisée en ce que le mécanisme de déplacement latéral (10 à 24) comprend un élément sélecteur (14, 11; 14, 11') du sens de déplacement latéral de la machine.

4. Machine suivant une des revendications précédentes, caractérisée en ce que le mécanisme de déplacement latéral pas-à-pas (10 – 24) comporte un mécanisme à roue libre (17) et à ressort (23), relié au moyen d'un élément de liaison (18) à une manivelle (19) solidaire de l'arbre (9), si bien que la rotation de l'arbre (9) assure l'actionnement du mécanisme de déplacement latéral.

5. Machine suivant une des revendications précédentes, caractérisée en ce que l'arbre (9) d'entrainement des couteaux (4) est entraîné par l'intermédiaire d'un réducteur (8, 8').

6. Machine suivant une des revendications précédentes caractérisée en ce qu'un mancheron (25) fixé au bati supporte les dispositifs de commande de la machine et permet le bon maintien de la machine pendant le travail.

7. Machine suivant une des revendications précédentes, caractérisée en ce qu'elle comprend deux butées latérales (7) articulées sur le bati dont une est appuyée contre le paroi du sillon, durant le travail, de manière à régler l'épaisseur des mottes dé coupées.

## Patentansprüche

1. Grabmaschine mit einem Rahmen, in dem mindestens ein Grabmesser (4), das einen Erdklumpen abschneidet, von einer geführten Kurbelwelle (9) zum Drehen gebracht wird und nach dem Abschneiden des Erdklumpens mit einem »Auswerfer« (6) mitarbeitet, der die Erde auswirft und auf dem Rahmen befestigt ist. Das Messer (4) ist mit einer schneidenden Seite versehen, die zur Kurbelwelle parallel verläuft. Die Maschine ist dadurch gekennzeichnet, daß der Rahmen einen Motor (27) trägt, der die Kurbelwelle zum Drehen bringt und schrittweise, intermittierend einen Mechanismus (10 zu 24) antreibt, der es möglich macht, die Maschine seitwärts zu verlegen, und zwar in einer zur Kurbelwelle (9) parallel laufenden Richtung, dieser Mechanismus ist auf dem Rahmen befestigt.

2. Maschine nach Anspruch 1, dadurch gekennzeichnet, daß der Mechanismus, der die seitliche Verlegung ermöglicht (10 zu 24) mit einem einzigen Tragrad (24) versehen ist, das auf dem Rahmen befestigt ist und zur Kurbelwelle (9), die das bzw. die Messer (4) trägt, senkrecht stehen.

3. Maschine nach Anspruch 1 oder 2, dadurch gekennzeichnet, daß der Mechanismus der seitlichen Bewegung (10 zu 24) mit einer »Sperrvorrichtung« versehen ist (14, 11; 14, 11'), die die seitliche Verlegung nach rechts oder nach links ermöglicht.

4. Maschine nach einem der obengenannten Ansprüche, dadurch gekennzeichnet, daß der Mechanismus, der die seitliche Bewegung ermöglicht (10 zu 24), mit einem Mechanismus versehen ist, der aus einem Freilaufsrad (17) und aus einer Feder (23) besteht. Jener Mechanismus ist durch ein Verbindungsglied (18) mit einer Kurbel (19) verbunden, die selber an die Kurbelwelle (9) angeschlossen ist (9), so daß die drehende Bewegung der Kurbelwelle (9) den Mechanismus antreibt, der die seitliche Bewegung ermöglicht.

5. Maschine nach einem der obengenannten Ansprüche, dadurch gekennzeichnet, daß die Kurbelwelle (9), die die Messer (4) zum Drehen bringt, von einem Mechanismus zur Verringerung der Geschwindigkeit (8, 8') angetrieben wird.

6. Maschine nach einem der obengenannten Ansprüche, dadurch gekennzeichnet, daß ein Lenker (25), der auf dem Rahmen befestigt ist, die Antriebsvorrichtung der Maschine trägt und beim Arbeiten die gute Haltung der Maschine ermöglicht.

7. Maschine nach einem der obengenannten Ansprüche, dadurch gekennzeichnet, daß sie mit zwei seitlichen Anschlägen (7) versehen ist, von denen einer im Laufe der Arbeit an der Wand der Furche lehnt, so daß man den Umfang der abgeschnittenen Erdklumpen selber bestimmen kann.

## Claims

1. Motorized spade composed of a body case in which at least a spade blade (4) slicing a sod of earth is rotated by a shaft (9) and cooperate on a portion of its way after the sod has been cut with a sod ejector (6) mounted on the body case, the blade (4) including a cutting portion parallel with the shaft (9) characterized by the fact that the body case supports the motor (27) driving the shaft (9) rotatively and actuating in intermittent step by step movements a mechanism (10 to 24) securing the lateral movement of the machine in a direction parallel to the shaft (9), this mechanism being mounted on the body case.

2. Machine according to Claim 1 in which the lateral progression mechanism (10 to 24) includes a single gear of the machine body which axis is perpendicular to the axis (9) supporting the blade (s) (4).

3. Machine according to one of Claims 1 or 2 in which the lateral progression mechanism (10 to 24) includes an element (14, 11) selecting the direction of the lateral movement of the machine.

4. Machine according to one of the preceding Claims in which the lateral and step by step progression mechanism (10 to 24) includes a free wheel (17) and spring (23) mechanism linked by a linking element (18) to a handle (19) integral with the shaft (9) so that the shaft (9) rotation secures the operation of the lateral progression mechanism.

5. Machine according to one of the preceding Claim in which the blades (4) driving shaft (9) is driven by a reducer (8, 8').

6. Machine according to one of the preceding Claims in which a lever (25) mounted on the body case supports the driving gear of the machine and holds the machine while it is working.

7. Machine according to one of the preceding Claims characterized by the fact that it includes two lateral stands (7) articulated on the body case. One of both stands is resting on the row during the digging in order to regulate the thickness of the cut sods.

FIG. 1

FIG. 2